# EUROPEAN PATENT APPLICATION

(11) **EP 2 052 648 A1**
(43) Date of publication of application: **29.04.2009**
(21) Application number: 07425664.5
(22) Date of filing: 22.10.2007
(51) Int. Cl.: A47G 19/02, B26D 3/24, A21C 15/04

(54) **Tray for serving food**

(71) Applicant: Alcas S.p.A., 50142 Firenze (IT)
(72) Inventor: Casebasse, Stefano, 50124 Firenze (IT)
(74) Representative: Leihkauf, Steffen Falk

(57) **Abstract**

A tray (1) for serving food, particularly confectionery items, comprises a support portion (2) suitable to support the food to be served and one or more guide grooves (3) suitable to guide cut means suitable to cut the food supported by the support portion (2) along cut paths. The guide grooves (3) extend according to groove extension lines having longitudinal profiles which define the cut paths on the support portion (2) and transversal profiles which define plunging paths for the cut means transversally to the support portion (2) along the cut paths. The transversal profiles of the guide grooves (3) comprise one or more ridges (4) and one or more valleys (5) arranged on different levels transversally to the support portion (2).

## Description

The object of the present invention is a tray for serving food, particularly confectionery items that are intended to be cut on the tray, such as cakes, jam tarts, desserts, or the like.

In order to facilitate the cutting operations of the food which is served on the tray, it is known to provide guide grooves in the latter which are shaped so as to create guides, for example, for a knife blade. Such guide grooves can be variously distributed on the tray as a function of the shape that is meant to be given to the served food when this is cut into portions.

However, these guide grooves are structural weakening elements for the tray, a phenomenon which is particularly undesirable, especially in the case of trays which are made of thin plastic material (as it frequently happens, for example, in the field of confectionery trays, which should ensure high lightness, as well as high manufacturing easiness, so as it is possible to impart aesthetically pleasant shapes and finishing to them). Due to these structural weakening, known trays are quite yielding, particularly they exhibit a low flexural strength. Therefore, quite frequently, due to the excessive flexural strains of the tray, for example, due to the served food weight, the latter deteriorates even before it is cut, or that the food portions which have already been cut undergo accidental movements, in some cases even coming out of the tray and falling down, irreparably deteriorating.

Therefore, the object of the present invention is to provide a tray in which the operations of cutting into portions a food being served thereon are easy to be carried out, and which is provided with a good flexural strength, so as to preserve the served food both before and after it has been cut into portions.

This and other objects are achieved by means of a tray for serving food according to claim 1.

In order to better understand the invention and appreciating the advantages thereof, several non-limiting exemplary embodiments thereof will be described below, with reference to the annexed figures, in which:

Fig. 1 is a perspective view of a tray according to the invention;

Fig. 2 is a plan view of the tray from Fig. 1;

Fig. 3 is a sectional view according to line III-III of the tray from Fig. 2;

Fig. 4 is an enlarged view of a detail of the tray section from Fig. 3;

Fig. 5 is a sectional view according to line V-V of the tray from Fig. 2;

Fig. 6 is a schematic, plan view of the tray according to a further possible embodiment of the invention;

Fig. 7 is a schematic, plan view of the tray according to a further possible embodiment of the invention;

Fig. 8 is a schematic, plan view of the tray according to a further possible embodiment of the invention;

Figs. 9a-9c are schematic illustrations suitable to describe the mechanical behaviour of a tray according to a possible embodiment of the invention and a tray according to the prior art.

With reference to the Figures, a tray for serving food is generally designated by the reference numeral 1. The tray 1 is, for example, suitable for serving confectionery items, such as cakes, jam tarts, desserts, or the like (not shown in the Figures).

The tray 1 comprises a support portion 2 suitable to support the food to be served on the tray 1. The support portion 2 preferably has such a shape as to define an at least partially planar seat 2' on which the food to be served can rest.

The tray 1 comprises one or more guide grooves 3 suitable to guide, along cut paths, cut means suitable to cut the food that is supported by the support portion 2 of the tray 1, for example, a knife blade (not shown in the Figures). The cut paths which are defined by the guide grooves 3 are an aid for cutting into portions the served food on the tray, so that these portions, after hey have been cut, may have an even and aesthetically pleasant shape.

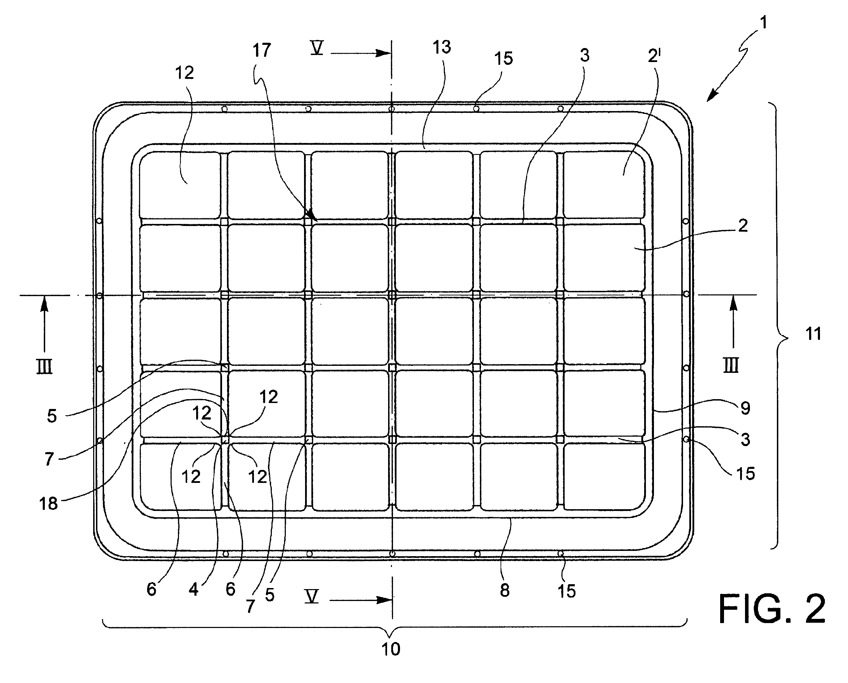

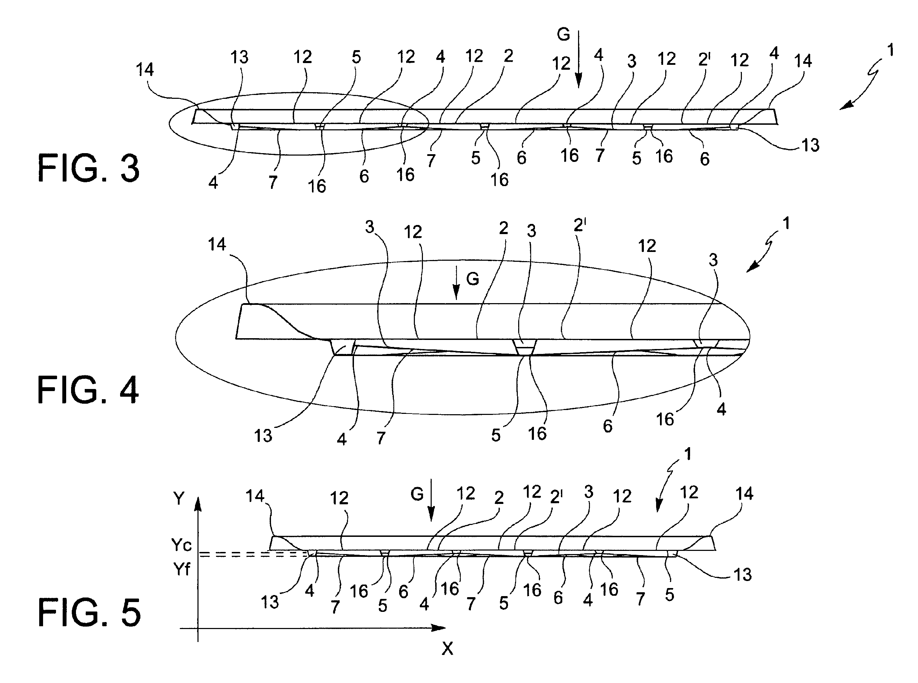

The guide grooves 3 are extended according to groove extension lines (for example, matching with the guide grooves 3 axes, not shown in the Figures) having longitudinal profiles which define the above-mentioned cut paths on the support portion 2 of the tray 1, and transversal profiles which define plunging paths for the cut means transversally to the support portion 2 along the cut paths. In order to better clarify the meaning of "longitudinal profile" and "transversal profile", by way of example, possible longitudinal profiles of the guide grooves 3 are visible in Fig. 2, whereas possible transversal profiles of the guide grooves 3 are visible in the Figs. 3-5. As it is apparent from the Figures, the longitudinal profiles of the guide grooves 3 determine the possible movements of the cut means along the support portion 2 in order to cut the food in corresponding portions. The transversal profiles of the guide grooves 3, instead, determine the cut depth of the food by the cut means, since the latter, following the cut path determined by the longitudinal profiles, are forced not to plunge into the support portion 2 (beside, of course, in the food which can be supported thereby) beyond the limits dictated by the transversal profiles.

In order to ensure a good flexural strength to the tray 1, and to the support portion 2 in particular, the guide grooves 3 transversal profiles comprise one or more ridges 4 and one or more valleys 5 arranged on different levels transversally to the support portion 2. In mathematical terms, the guide grooves 3 transversal profiles comprise one or more maximums and one or more minimums, absolute and/o relative. Conventionally referring to the standard conditions of use of the tray, in which the food is rested on the support portion 2 under the effect of the force of gravity G, the maximums of the guide grooves 3 transversal profiles correspond to the ridges 4, while the minimums correspond to the valleys 5

The ridges 4 and/or the valleys 5 of each guide groove 3, or different guide grooves 3, can respectively be at all levels, but preferably all the ridges 4 and all the valleys 5 are, respectively, substantially at the same level transversally to the support portion 2. With reference, for example, to Fig. 5, in which a pair of Cartesian axes x, y is illustrated, where the x-axis (abscissas) is parallel to the planar seat 2' and the y-axis (ordinates) is orthogonal to the y-axis, it means that all the ridges 4 preferably have the same ordinate y_{c} and all the valleys 5 preferably have the same ordinate y_{f}.

Advantageously, the guide grooves 3 transversal profiles comprise ascending lengths 6 and descending lengths 7, in which the ascending lengths 6 and the descending lengths 7 have mutually opposite average slopes, and in which each of the ascending lengths 6 and the descending lengths 7 has, at the two ends thereof, a ridge 4 and a valley 5, respectively. The terms "ascending" and "descending" are meant with reference to the standard conditions of use of the tray 1, as described above, as well as to the reference axes x, y as illustrated in Fig. 5. According to such convention, the ascending lengths 6 have positive average slopes and the descending lengths 7 have negative average slopes. By the term "average slope" is meant the average of the angular coefficients of the straight lines which are tangent to the profile lengths in each of their points.

Such configuration of the guide grooves 3, the transversal profiles of which are provided with the ridges 4 and valleys 5, ensures a flexural strength of the tray 1 which is higher than the flexural strength ensured, for example, by guide grooves with zero-slope rectilinear transversal profiles, present in the trays according to the prior art.

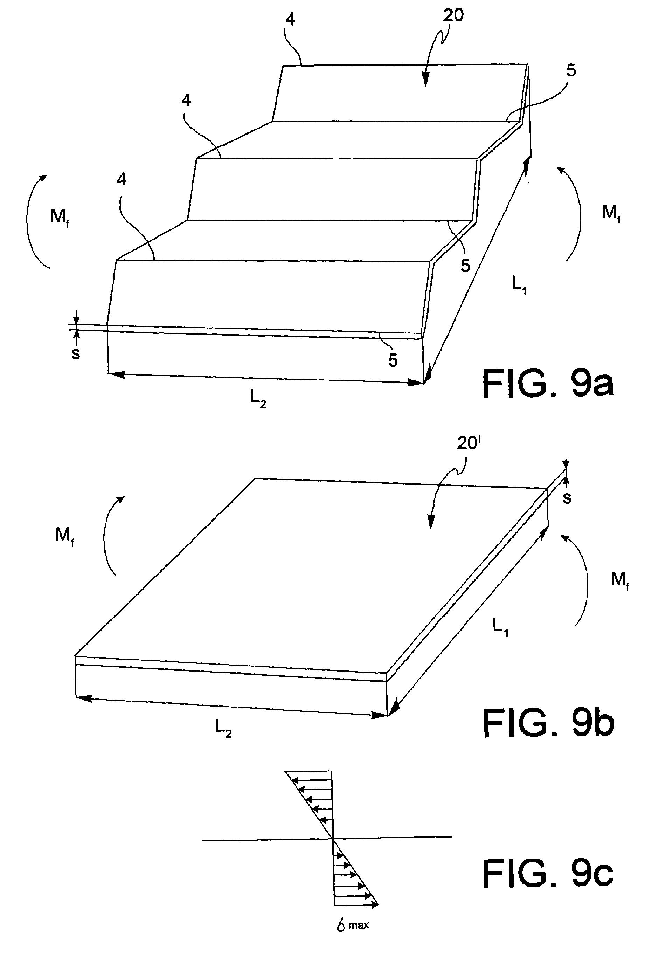

In order to better understand the advantages related to the particular configuration of the guide grooves 3 of the tray according to the invention, reference is to be made to the Figs. 9a-c. In Fig. 9a a plate 20 is shown with a transversal section having a profile similar to a possible transversal profile of the guide grooves 3 of the tray according to the invention, comprising ridges 4 and valleys 5, while in Fig. 9b a plate 20' is shown with a transversal section having a profile similar to the transversal profile of the guide grooves of a tray according to the prior art, with a zero-slope rectilinear progression. The two plates 20 and 20' are provided with the same thickness s and equal side dimensions L1 and L2. Equal, opposite bending moments M_{f} are applied to both plates 20 and 20' ends, such as to keep the plates 20 and 20' in static balance, which generate, in all the resistant sections of the plates, transversal to the length side L2, constant bending moments. This situation is ascribable to the standard condition of use of the tray, in which the distributed weight of the food creates bending moments in the sections of the trays at the guide grooves.

In a resistant section orthogonal to the length side L2 of the plates 20 and 20', the flexural stresses have a so-called "butterfly" progression, characterized by maximum flexural stresses oman at the ends (Fig. 9c). Such maximum stresses σₘₐₓ are inversely proportional to a geometrical size of the section, known as "flexural strength module". Advantageously, the presence of the ridges 4 and the valleys 5 makes the flexural strength module of the resistant section of the plate 20 in Fig. 9a to be higher than that of the resistant section of the plate 20' in Fig. 9b. Consequently, the maximum flexural stress σₘₐₓ, as well as the maximum flexural strain resulting therefrom, of the plate 20 in Fig. 9a is lower than that of the plate 20' in Fig. 9b.

The description which has been previously provided of the plates 20 and 20' mechanical behaviour can be similarly applied to the transversal sections of trays at the guide grooves, therefore it illustrates how the tray according to the invention is flexurally stiffer compared to a tray provided with grooves having zero-sloped, rectilinear transversal profiles.

Advantageously, each of the guide grooves 3 transversal profiles comprises a sequence of the ascending lengths 6 and descending lengths 7, alternately arranged one to the other. Thereby, an alternation of the ridges 4 and valleys 5 is achieved for each of the guide grooves 3, which makes so that the overall dimensions of the tray 1 in depth, that is in the direction orthogonal to the planar seat 2' of the support portion 2 on which the food is intended to rest, keep being reduced (in this regard, see, for example, Figs. 3-5).

In accordance with one embodiment, the ascending lengths 6 and the descending lengths 7 of the guide grooves 3 transversal profiles are essentially rectilinear, or comprise essentially rectilinear portions. Preferably, the ascending lengths 6 and the descending lengths 7 of the guide grooves 3 transversal profiles have slopes which are essentially equal in absolute value (and of opposite sign).

In accordance with one embodiment, the guide grooves 3 transversal profiles comprise stationary portions 16 having essentially null slopes at least at some of the ridges 4 and/or the valleys 5, preferably at all the ridges 4 and all the valleys 5 of the guide grooves 3, except for the ridges 4 and the valleys 5 at the guide grooves 3 ends.

Of course, the guide grooves 3 transversal profiles may have configurations which differ compared to what has been previously described. By way of non-limiting example, the guide grooves 3 transversal profiles can also be or can comprise sinusoidal, or co-sinusoidal, or arc-shaped (for example, circle arc, or ellipse arc), or polynomial, or broken portions, or they can be approximations or combinations of the profiles listed above.

Advantageously, the tray 1 comprises a plurality of the above-mentioned guide grooves 3, thus shaped and arranged so that the longitudinal profiles thereof form a cut grid 17 on the support portion 2. All the possible cut paths which the cut means can follow with the aid of the guide grooves 3 correspond to such cut grid 17. The cut grid 17 advantageously divides the food support portion 2 in a plurality of support sectors 12 corresponding to the food portions which will be able to be cut with the aid of the guide grooves 3. The cutting along the guide grooves 3 of the cut grid 17, rather than outside them, is preferred in order to achieve even portions of the served food on the tray, but it is not necessary for the cutting of the food according to modes different from those provided for on the basis of the cut grid 17.

The cut grid 17 can be differently shaped, also as a function of the support portion and the tray 1 overall shape, as well as of the type of food that the latter is intended to serve.

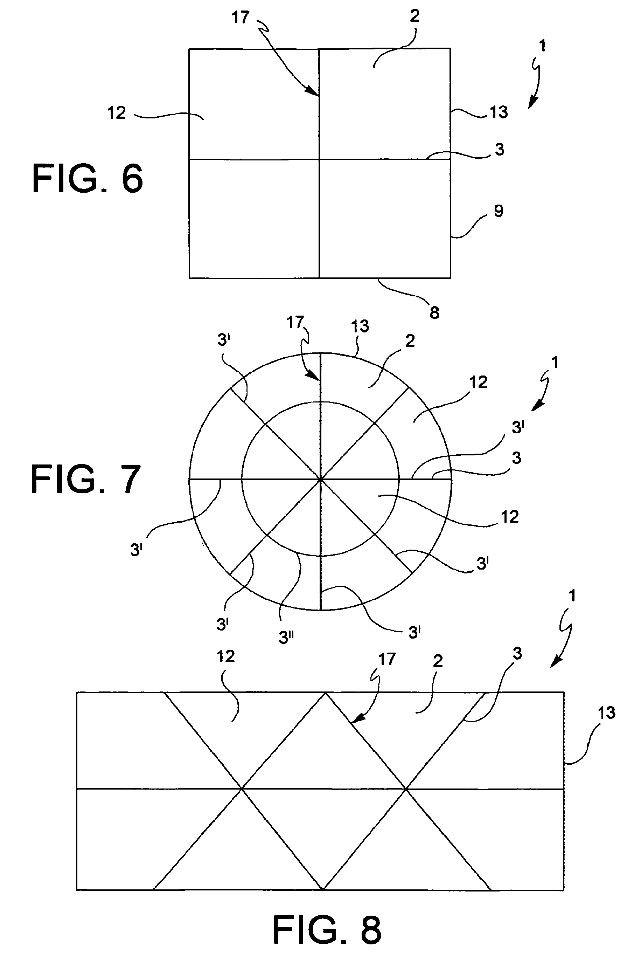

According to a possible embodiment, the support portion 2 of the tray 1 on which the food to be served is intended to rest has, laterally, essentially the shape of a rectangle or a square, and it is therefore provided with a first main side 8 and a second main side 9 essentially orthogonal one to the other, beside two further sides, essentially parallel to such first and second sides (in this regard, see, for example, Figs. 2 and 6), respectively. Advantageously, the cut grid 17 comprises a first guide grooves 10 group and a second guide grooves 11 group, each of which comprises one or more of the guide grooves 3. The guide grooves 3 of each guide grooves group have longitudinal profiles preferably essentially parallel one to the other. Still more preferably, the guide grooves 3 longitudinal profiles of the first guide grooves 10 group are essentially orthogonal to the guide grooves 3 longitudinal profiles of the second guide grooves 11 group (Fig. 2). Thereby, the cut grid 17 defines a plurality of the above-mentioned support sectors 12, which are of an essentially rectangular or squared shape. The dimensions, shape (rectangular or squared), and the overall number of the support sectors 12 depend on the number and the mutual distance of the guide grooves 3 of each group of guide grooves 10 and 11. Furthermore, advantageously, the guide grooves 3 longitudinal profiles of the first guide grooves 10 group are essentially parallel to the first side 8 of the support portion 2 of the tray 1, and the guide grooves 3 longitudinal profiles of the second guide grooves 11 group are essentially parallel to the second side 9 of the support portion 2 of the tray 1. Thereby, it is possible, for example, to serve a rectangular or squared cake on the tray 1, and cut it into portions, also rectangular or squared, corresponding to the rectangular or squared support sectors 12.

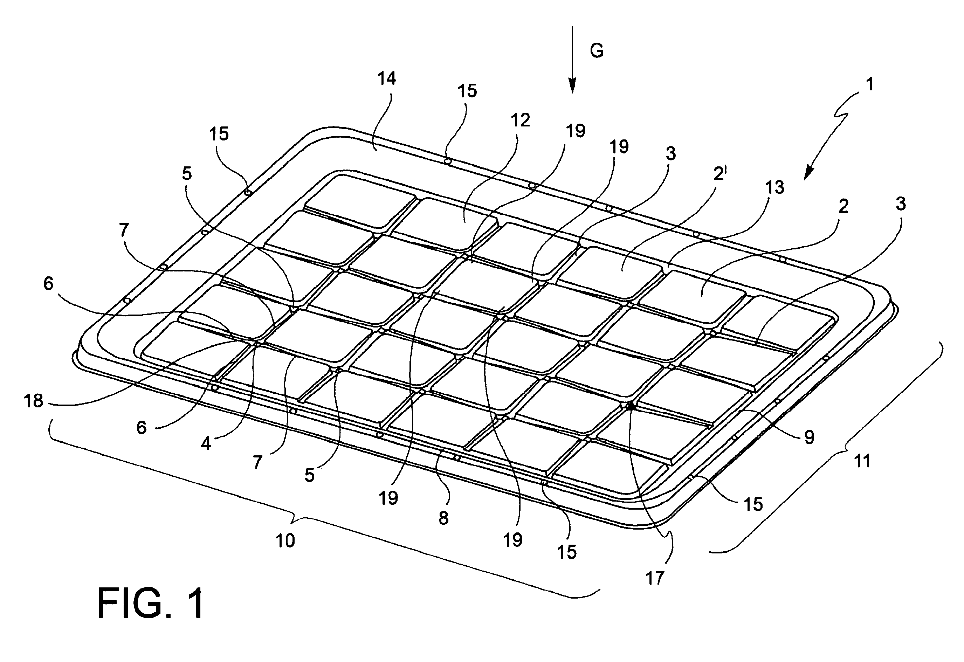

The density of the cut grid 17, that is the number and the mutual distance among the guide grooves 3 of the first group 10 and the second group 11 of the guide grooves can be varied in accordance with the needs. For example, in the case of a rectangular-shaped support portion 2, the first guide grooves 10 group can be provided with five guide grooves 3, and the second guide grooves 11 group can be provided with four guide grooves, so as to define thirty rectangular support sectors 12 which can correspond to as many food portions which can be cut on the tray 1 (Figs. 1 and 2).

Advantageously, the guide grooves 3 of the first group 10 and/or the guide grooves 3 of the second group 11, preferably the guide grooves 3 of both groups 10 and 11, are thus shaped so that the ridges 4 and valleys 5 are mutually alternated on corresponding ends of the guide grooves 3 of the same group. Thereby, starting from each side of the support portion 2, particularly from the first side 8 or the second side 9, as well as from the two sides parallel to these, the guide grooves 3 belonging to each group of guide grooves alternatively begin with an ascending length 6 and with a descending length 7 (see, for example, Fig. 1).

with further advantage, at least some of the ridges 4 and at least some of the valleys 5, particularly the ridges 4 and the valleys 5 which are not at the end of the guide grooves 3, are located at intersection areas 18 between guide grooves 3 of the cut grid 17. Still more advantageously, in order to promote the rotations of the cut means on the support portion 2 when these are at one of the intersection areas 18 of the guide grooves 3, in such intersection areas 18 the guide grooves 3 sections, transversally to the groove extension lines along which the guide grooves 3 extend, are higher than the guide grooves 3 sections at the ascending lengths 6 and the descending lengths 7. Such section widening of the guide grooves 3 results in a cutting off of the edges 19 of the support sectors 12. Preferably, the guide grooves 3 are thus shaped so that these edges 19 of the support sectors 12 are rounded (in this regard, see, for example, Figs. 1 and 2).

According to a further possible embodiment, the support portion 2 of the tray 1 on which the food is intended to rest has a side outline with essentially circular shape (see, for example, Fig. 7). Also in this case, the guide grooves 3 can be variously shaped. For example, a plurality of guide grooves 3' can be provided having longitudinal profiles which extend along radial directions, so that the support sectors 12 which are formed have the shape of circular sectors. In addition, at least one guide groove 3" can be provided having a longitudinal profile suitable to divide the longitudinal profiles of the radial guide grooves 3' in several parts. For example, the partition guide groove 3" longitudinal profile may have a circular shape, preferably concentric to the perimeter of the support portion 2. Alternatively, or in addition to the circular partition guide groove 3" a limit stop of the cut means can be provided (not shown in the Figures), for example a projecting or recessed band, preferably also of a circular shape and concentric to the perimeter of the circular support portion 2, so that a cutting of the food is possible along the radial guide grooves 3' from the outside of the support portion 2 to the limit stop, and subsequently from the limit stop to the center of the circular support portion 2, or vice versa. The ridges and valleys can, for example, be arranged at the intersections of the radial guide grooves 3' and the partition circular guide groove 3" or the limit stop, and/or at the radial ends of the guide grooves 3', and/or at the center of the circular support portion 2, from where the radial guide grooves 31 start, or according to combinations of the above-listed arrangements.

Of course, countless further combinations of arrangements of the shape of the support portion 2, as well as of the guide grooves 3 arrangement and progression along and transversally to the support portion 2 are possible. A possible further embodiment is illustrated in Fig. 8 by way of example only, in which the guide grooves 3 have triangular longitudinal profiles and the support portion 2 has, laterally, a rectangular shape.

According to a possible embodiment, the guide grooves 3 and/or the cut grid 17 are enclosed by a peripheral restraint groove 13 having a closed longitudinal profile which extends along the support portion 2 contour. Thereby, the cut grid 17 is, in the whole, closed, therefore it not only provides an indication for the cutting of the food which is served on the tray (given by the guide grooves 3 of the cut grid 17), but also an indication on how properly locate such food on the support portion 2 of the tray 1.

In accordance with a further embodiment, the tray 1 further comprises a peripheral restraint edge 14 which laterally surrounds the support portion 2 and which has the function of decreasing the risk that the food which is served on the tray may come out or fall from the support portion 2.

Advantageously, the tray 1 comprises cutting guides 15 corresponding to all or some of the guide grooves 3 (Figs. 1 and 2). Such cutting guides 15 have the function of allowing the user to locate the guide grooves 3 also when these are hidden to the view, since covered by the food which is served on the tray 1, therefore to position the cut means, for example the knife blade, in positions which are suitable to engage the guide grooves 3. Preferably, the cutting guides 15 are arranged along the restraint edge 14 so as to be easily visible by the user and easily able to be followed by the knife blade. Still more preferably, one of the above-mentioned cutting guides 15 is provided at each end of the guide grooves 3. According to a possible embodiment, the cutting guides 15 have the configuration of sphere-slice protrusions protruding from the restraint edge 14 and having dimensions which are comparable to those of the guide grooves 3 transversal section.

Of course, the cutting guides 15 can take further configurations. For example, the cutting guides 15 can be shaped as pins, or as notches obtained in the restraint edge 14, or in accordance with other functionally equivalent configurations.

Preferably, the tray 1 is made in a single piece by moulding, for example from a plastic materials sheet.

From the description set forth above, one skilled in the art will be able to appreciate how the tray according to the invention overcomes at least partially the problems mentioned with reference to the prior art.

Particularly, those skilled in the art will be able to appreciate how the tray according to the invention allows easy cutting operations of the food into portions due to the presence of the cutting grooves. The particular configuration of the guide grooves, having a transversal profile with ridges and valleys, allows a suitable flexural strength of the tray support portion, particularly a suitable strength to the food weight. Therefore, by means of the tray according to the invention it is possible to serve and cut a food with reduced risks of a deterioration thereof, an accidental falling thereof, as well as a cutting into inaccurate, uneven, and aesthetically unpleasant-shaped portions thereof.

To the previously-described embodiments of the tray according to the invention, those skilled in the art, in order to meet specific, contingent needs, will be able to make a number of adaptations, modifications, or replacements of elements with others which are functionally equivalent, without departing from the scope of the following claims.

## Claims

1. A tray (1) for serving food, particularly confectionery items, comprising a support portion (2) suitable to support said food to be served, and one or more guide grooves (3) suitable to guide cut means which are suitable to cut the food supported by said support portion (2) along cut paths, wherein said guide grooves (3) extend according to groove extension lines having longitudinal profiles which define said cut paths on the support portion (2), and transversal profiles which define plunging paths for the cut means transversally to said support portion (2) along said cut paths, **characterized in that** said guide grooves (3) transversal profiles comprise one or more ridges (4) and one or more valleys (5) arranged on different levels transversally to said support portion (2).

2. The tray (1) according to the preceding claim, wherein said guide grooves (3) transversal profiles comprise ascending lengths (6) and descending lengths (7) having average slopes of opposite sign, each of said ascending lengths (6) and descending lengths (7) having one of said ridges (4) and one of said valleys (5), respectively, at two of its ends.

3. The tray (1) according to the preceding claim, wherein each of the transversal profiles of said guide grooves (3) comprises a sequence of said ascending lengths (6) and said descending lengths (7) alternatively arranged one to the other.

4. The tray (1) according to the claim 2 or 3, wherein said ascending lengths (6) and said descending lengths (7) are essentially rectilinear, or comprise essentially rectilinear portions.

5. The tray (1) according to the preceding claim, wherein said essentially rectilinear ascending lengths (6) and descending lengths (7), or the essentially rectilinear portions thereof have slopes essentially equal one to the other in absolute value and of opposite sign.

6. The tray (1) according to any of the preceding claims, wherein said ridges (4) and said valleys (5), respectively, are essentially at the same level transversally to said support portion (2).

7. The tray (1) according to any of the preceding claims, wherein the transversal profiles of at least some of said guide grooves (3) comprise stationary portions (16) having essentially null slopes arranged at least at some of said ridges (4) and/or said valleys (5).

8. The tray (1) according to any of the preceding claims, comprising a plurality of said guide grooves (3), shaped and arranged so that the longitudinal profiles thereof form a cut grid (17) on said support portion (2).

9. The tray (1) according to the preceding claim, wherein at least some of said ridges (4) and at least some of said valleys (5) are located at intersection areas (18) of the guide grooves (3) of said cut grid (17).

10. The tray (1) according to the preceding claim, wherein, transversally to said groove extension lines, the sections of said guide grooves (3) at said intersection areas (18) are higher than the sections of said guide grooves (3) at said ascending (6) and descending (7) lengths.

11. The tray (1) according to any of the claims 8 to 10, wherein said cut grid (17) comprises a first group (10) of guide grooves (3) and a second group (11) of guide grooves (3), each of said first (11) and second (12) groups of guide grooves (3) comprising one or more of said guide grooves (3) having longitudinal profiles essentially parallel one to the other.

12. The tray (1) according to the preceding claim, wherein the longitudinal profiles of said one or more guide grooves (3) of said first group (10) of guide grooves (3) are essentially orthogonal to the longitudinal profiles of said one or more guide grooves (3) of said second group (11) of guide grooves (3).

13. The tray (1) according to the claim 11 or 12, wherein in said first group (10) and/or said second group (11) of guide grooves (3), the ridges (4) and the valleys (5) located at corresponding ends of successive guide grooves (3) of the same guide grooves group are alternatively arranged.

14. The tray (1) according to any of the preceding claims, wherein said support portion (2) has, laterally, essentially the shape of a rectangle or a square.

15. The tray (1) according to the preceding claim as dependant from claim 11, wherein the longitudinal profiles of the guide grooves (3) of said first group (10) and second group (11) of guide grooves (3) are respectively essentially parallel to one of two orthogonal sides (8,9) of said support portion (2) having the shape of a rectangle or a square.

16. The tray (1) according to any of the claims 1 to 10, wherein said support portion (2) has, laterally, essentially the shape of a circle.

17. The tray (1) according to the preceding claim, wherein the longitudinal profiles of said guide grooves (3) extend along radial directions of said circle.

18. The tray (1) according to the claim 16 or 17, further comprising a guide groove (3") and/or a limit stop having a longitudinal profile of an essentially circular shape and concentric to the perimeter of said support portion (2).

19. The tray (1) according to any of the preceding claims, comprising cutting guides (15) corresponding to all or some of said guide grooves (3) for a positioning of said cut means in positions which are suitable to engage said guide grooves (3).

20. The tray (1) according to the preceding claim, wherein said cutting guides (15) are arranged on a restraint edge (14) which laterally envelops said support portion (2).
